# EUROPEAN PATENT APPLICATION

(11) **EP 4 056 051 A1**
(43) Date of publication of application: **14.09.2022**
(21) Application number: 22160801.1
(22) Date of filing: 08.03.2022
(51) Int. Cl.: A23L 15/00

(54) **METHOD OF PRODUCTION OF A SUBROGATE PLANT PRODUCT OF EGGS**

(30) Priority: 10.03.2021 IT 202100005564
(71) Applicant: Ingrit S.r.l., 35027 Noventa Padovana PD (IT)
(72) Inventor: Sigaeva, Anastasia, Noventa Padovana (IT); Agostini, Riccardo, Noventa Padovana (IT); Motta, Pietro, Ospedaletto Euganeo (IT); Peschi, Leopoldo, Treviso (IT); Perelli, Andrea, Treviso (IT); Cappelletto, Francesco, Massanzago (IT)
(74) Representative: De Giorgi, Michele

(57) **Abstract**

The present invention relates to a method of production of an egg-substitute vegetable food product, which comprises a step A of mixing first ingredients comprising: water, vegetable oil and powdered components so as to obtain a homogeneous mixture. The method further comprises a step B of production of a component in a gel state based on mucilage, cellulose and amides extracted from seeds comprising Plantago Ovata, Linum Usitatissimum and Salvia Hispanica. Furthermore, the method comprises a step C of adding to said homogeneous mixture obtained by means of step A said gel obtained by means of said step B. The present invention relates furthermore to an egg-substitute vegetable food product.

## Description

### TECHNICAL SECTOR

The present invention relates to the food sector, in particular to the sector for food products, in particular vegetable food products. More specifically, the present invention relates to a method for the production of a vegetable product which substitutes or replaces egg.

### PRIOR ART

Eggs are one of the most widely found and widely consumed food products in the world. Apart from being able to be eaten as boiled eggs or in the form of omelettes, eggs are also widely used as a base for other culinary preparations, both sweet and savoury in nature, in particular as the essential ingredient for many oven-baked products such as pies or cakes or as the basic ingredient in sauces.

Despite the important nutritional properties of eggs, which constitute a good source of proteins, they are also rich in cholesterol and may be a vehicle for harmful pathogenic agents such as Salmonella and Escherichia coli.

For these reasons also, in recent years there has been a huge increase in the number of people who have decided to adopt a vegan lifestyle, which excludes food products including eggs, as well as people who have been diagnosed as having food allergies, in particular allergies to egg-derived proteins.

For this reason and owing to the widespread use of eggs in many food products, there has been a major impetus during recent years to develop a food product, preferably of vegetable origin, able to replace eggs wholly or partly.

### SUMMARY OF THE INVENTION

The problem forming the basis of the present invention is therefore that of overcoming the aforementioned drawbacks with reference to the prior art.

The task of the present invention, therefore, is to provide a method for the production of a vegetable food product which is able to replace egg with regard to its taste and which is characterized by nutritional values similar to those of egg.

In particular, in connection with this task, one object of the invention is to obtain a method of production of an egg-substitute vegetable food product, namely a vegetable food product which substantially reproduces the taste and consistency of egg-based food products.

A further object of the present invention is to propose a method of production of a vegetable food product which has a taste and consistency comparable to those of eggs.

Furthermore, an object of the present invention is to propose a method of production of a vegetable food product which may be a substitute for eggs and which may be suitable for consumption by persons who suffer from intolerance or allergies in relation to eggs.

Last but not least, an object of the present invention is to propose a method of production of a vegetable food product which may be an egg substitute suitable for consumption by persons who have chosen or require a vegan diet or a diet with a low cholesterol content.

A further object of the present invention is to propose a vegetable food product which substitutes and/or replaces eggs.

This task as well as these and other objects which will become clearer below are achieved by a method of production of a vegetable food product and an egg-substitute vegetable food product according to the attached independent claims.

Detailed characteristics of a method for the production of a vegetable food product according to the present invention are contained in the dependent claims.

Further characteristic features and advantages of the invention will emerge more clearly from the description of a preferred, but non-exclusive embodiment of a method of production of a vegetable food product according to the invention, illustrated in an embodiment provided solely by way of a non-limiting example in the attached sets of drawings listed below.

### DETAILED DESCRIPTION

The present invention, as already mentioned, relates to a method of production of an egg-substitute food product.

This method comprises:
- a step A of mixing first ingredients comprising: water, vegetable oil and powdered components so as to obtain a homogeneous mixture;
- a step B of production of a component in a gel state based on mucilage extracted from seeds and cellulose comprising: Plantago Ovata, Linum Usitatissimum, Salvia Hispanica and cellulose;
- a step C of adding to said homogeneous mixture obtained by means of step A said gel obtained by means of said step B.

In detail, step A comprises mixing ingredients such as water, vegetable oil and powdered components until a homogeneous mixture is obtained. These powdered components may comprise chickpea flour, lentils, beans and peas, corn starch or potato flour, pea proteins, trehalose, broad bean proteins, carrageenan, sunflower lecithin, vegetable extracts, preferably pumpkin, carrot, safflower, beetroot, vegetable fibres, natural aromas, salt, egg aroma, potassium sorbate. Preferably, the percentage by weight, in relation to the total mixture of step A, of these powdered components is respectively between 3.5% and 8%, preferably 6.5%, for the chickpea flour, between 3% and 7%, preferably 5%, for the corn starch, between 0.5% and 3%, preferably 1.45%, for the pea proteins, between 0.5% and 3%, preferably 1.45%, for the trehalose, between 0.5% and 3%, preferably 1.40%, for the carrageenan, between 0.01% and 0.2%, preferably 0.12%, for the sunflower lecithin, between 0.1% and 0.6%, preferably 0.41% for the vegetable extracts, between 0.2% and 0/9%, preferably 0.70% for the vegetable fibres, between 0.2% and 0.9%, preferably 0.60%, for the natural aromas, between 0.09% and 0.3%, preferably 0.15% for the salt, between 0.08% and 0.2%, preferably 0.1%, for the egg aroma, and between 0.01% and 0.1%, preferably 0.05%, for the potassium sorbate.

Moreover, further components configured to modify the taste of the finished food product may be added to the powdered components. In particular, vegetable proteins, preferably obtained from broad bean and pea, may be added in order to help improve the consistency and the organoleptic characteristics of the finished product. Moreover, Himalayan black salt (kala namak) or vegetable extracts, for example apple and/or safflower and/or pumpkin extracts, may be added for colouring and/or flavouring purposes.

This powder mix, together with the water, vegetable oil and gel component in step B, contributes to the success of the vegetable food product. In particular, the powder mix helps improve both the taste of the final product and the consistency thereof.

Preferably, the mixing step A is performed at a speed of between 100 and 4500 rpm. Mixing the aforementioned components within this speed range ensures that the homogeneous mixing of all the components is achieved.

The component in the gel state obtained in step B helps improve the quality of the finished product. In particular, this component in the gel state helps obtain a vegetable food product with a consistency comparable to that of an egg. For example, this gel component helps obtain, during cooking of the vegetable food product, a foodstuff which has a consistency and/or a texture similar to that of an egg-based omelette, or any other preparation based on liquid egg, namely formed by egg yoke and egg white.

This component in the gel state is obtained by mixing the seeds of Plantago Ovata, Linum Usitatissimum and Salvia Hispanica and cellulose. Preferably, the percentage by weight of these seeds in relation to the total weight of the component in the gel state is greater than 30%. Preferably, the percentage by weight of these seeds in relation to the total weight of the component in the gel state is between 30% and 35%, and is preferably equal to 33%.

Advantageously, the aforementioned seeds may be mixed so as to then be hydrated. Moreover, advantageously, a mucilaginous component obtained from the hydration of the mixed seeds may be extracted. This mucilaginous component is rich in vegetable fibres and contributes to the nutritional properties of the finished vegetable food product. Moreover, further fibres and/or starches not derived from the aforementioned seeds, in particular cellulose and waxy starches, may be added to the mucilaginous component.

Preferably, the hydration of the mixed seeds may be performed at a temperature of between 15°C and 45°C using water with a hardness of between 15°F and 50°F and with mechanical stirring at a speed of between 150 rpm and 1200 rpm. Furthermore, during this step a vacuum pump may be used so as to create in the mixing chamber a vacuum of between 0.9 bar and 0.3 bar.

Preferably, moreover, the mucilaginous component may be subsequently heated to a temperature of between 35°C and 70°C and may then be cooled to a temperature lower than 15°C during a time period of between 30 minutes and 4 hours. In detail, the heating and subsequent cooling favour the formation of the mucilage.

During cooling of the mucilaginous component to a temperature lower than 15°C, an aromatic component, configured to modify the taste of the finished product, may be added to the said mucilaginous component. Preferably this addition of the aromatic component may be performed when the mucilaginous component is at a temperature of between 25°C and 45°C.

Preferably, the mucilaginous component, once extracted, may be stored at a temperature of between 0°C and 25°C. This storage temperature helps maintain the gel state of the mucilaginous component, favouring consequently the shelf life thereof.

The component in the gel state obtained in step B may then be mixed in step C with the homogeneous component obtained in step A. This mixing operation may be performed at a speed of between 100 rpm and 600 rpm, in order to mix the compound homogeneously.

The method of preparation of a vegetable food product according to the present invention may also comprise a step D of degassing the product obtained by means of the step C.

This degassing step D advantageously helps remove partially from the product obtained in step C the air trapped in it, improving consequently the consistency of the end product. Preferably, the degassing step D is performed by applying a vacuum condition of between 0.9 bar and 0.3 bar. Moreover, preferably, the operating temperatures during the degassing step D must not exceed 90°C and preferably must be lower than 70°C. Advantageously, the degassing step D helps speed up the overall production of the vegetable food product.

Preferably, the degassing step D is configured so as to not adversely affect the characteristics of the end product, in particular the taste and the consistency of the vegetable food product. Advantageously, the degassing step D modifies the viscosity of the product obtained from step C, facilitating the sliding movement thereof in a packaging plant.

Moreover, the method may comprise a step E of packaging the product obtained by means of the step D. This packaging step E may be performed by means of a volumetric metering device configured to feed in a metered manner inside the sales packaging the product obtained in the degassing step D.

Treatments may also be provided for stabilization/pasteurization of the product after packaging thereof. These treatments are configured so as to not to modify the characteristics of the product, Examples of this type of treatment are treatments in a high-pressure autoclave or plate and tube pasteurizer.

The present invention also relates to an egg-substitute vegetable food product obtained by means of the method of production of a vegetable food product as described above.

The invention thus devised may be subject to numerous modifications and variations, all of which fall within the scope of protection of the attached claims.

Moreover, all the details may be replaced by other technically equivalent elements.

Where the operational characteristics and the techniques mentioned in the following claims are followed by reference numbers or symbols, these reference numbers or symbols have been assigned with the sole purpose of facilitating understanding of the said claims and consequently they do not limit in any way the interpretation of each element which is identified, purely by way of example, by said reference numbers or symbols.

## Claims

1. Method of production of an egg-substitute vegetable food product, which comprises:
- a step A of mixing first ingredients comprising: water, vegetable oil and powdered components so as to obtain a homogeneous mixture;
- a step B of production of a component in a gel state based on mucilage extracted from seeds and cellulose comprising:
∘ Plantago Ovata;
∘ Linum Usitatissimum;
∘ Salvia Hispanica;
- a step C of adding to said homogeneous mixture obtained by means of step A said gel obtained by means of said step B.

2. Method of production according to claim 1, wherein said step B comprises mixing said seeds, hydrating said mixed seeds and filtering a mucilaginous component obtained from said hydration of said mixed seeds.

3. Method according to claim 2, wherein said hydration of said mixed seeds is carried out at a temperature of between 15°C and 45°C with water having a hardness of between 15°F and 50°F and with mechanical stirring at a speed of between 150 rpm and 1200 rpm.

4. Method according to claim 3, wherein said mucilaginous component is heated to a temperature of between 35°C and 70°C and subsequently cooled to a temperature lower than 15°C during a time period of between 30 minutes and 4 hours.

5. Method according to claim 4, wherein said step of cooling to a temperature lower than 15°C further comprises the addition to said mucilaginous component of an aromatic component when said mucilaginous component is at a temperature of between 25°C and 45°C.

6. Method according to claim 5, wherein said mucilaginous component is stored at a temperature of between 0°C and 25°C

7. Method according to any one of the preceding claims, wherein said step C comprises mixing said homogeneous mixture obtained by means of step A and said gel obtained by means of said step B at a speed of between 100 and 600 rpm.

8. Method according to any one of the preceding claims, further comprising a step D of degassing the product obtained by means of said step C.

9. Method of production according to claim 8, further comprising a step E of packaging the product obtained by means of step D.

10. Egg-substitute vegetable food product obtained by means of a method of production according to any one of the preceding claims.
